# EUROPÄISCHE PATENTSCHRIFT

(11) **EP 2 004 914 B1**
(45) Veröffentlichungstag und Bekanntmachung des Hinweises auf die Patenterteilung: **24.11.2010**
(21) Anmeldenummer: 07718376.2
(22) Anmeldetag: 11.04.2007
(51) Int. Cl.: E01H 5/09

(54) **AUSWURFSCHLEUDER**
CENTRIFUGAL EJECTOR
CENTRIFUGEUR-EJECTEUR

(30) Priorität: 11.04.2006 AT 29106 U
(43) Veröffentlichungstag der Anmeldung: 24.12.2008
(73) Patentinhaber: Niederer, Hermann Jun, 3213 Frankenfels (AT); Niederer, Manuel, 3213 Frankenfels (AT); Niederer, Alexander, 3213 Frankenfels (AT)
(72) Erfinder: Niederer, Hermann Jun, 3213 Frankenfels (AT); Niederer, Manuel, 3213 Frankenfels (AT); Niederer, Alexander, 3213 Frankenfels (AT)
(86) Internationale Anmeldenummer: PCT/AT2007/000159
(87) Internationale Veröffentlichungsnummer: WO 2007/115345

(56) Entgegenhaltungen:
- CH-A5- 559 288
- FR-A- 1 099 252

## Beschreibung

Die Anmeldung betrifft eine Auswurfschleuder mit einem wenigstens einen Auswurfhebel aufweisenden Schleuderrad, welches in einem eine Auswurföffnung aufweisenden Gehäuse gelagert und zu Rotation antreibbar ist.

Derartige Auswurfschleudern finden in vielfältigen Einsatzgebieten verwendung. Insbesondere im land- und forstwirtschaftlichen Bereich ist der Einsatz derartiger Auswurfschleudern bei Erntemaschinen, Entrindungsvorrichtungen und dgl. bekannt. Neben derartigen eigenständigen Vorrichtungen sind auch Zusatzvorrichtungen bekannt, welche an Traktoren und andere landwirtschaftliche Maschinen angekuppelt werden können, sodass sie von deren Motor angetrieben werden. In diesem Zusammenhang sind beispielsweise Schneefräsen bekannt geworden, welche an Traktoren oder Kleinbagger angekuppelt werden.

Schneefräsen weisen in der Regel eine Frästrommel auf, die vor dem Fahrzeug angebracht ist und deren Achse parallel zu der Fahrzeugachse verläuft. Auf der Trommel, die sich meist über die gesamte Fahrzeugbreite erstreckt, sind Lamellen schneckenförmig angebracht, die sowohl dem Abschaben des Schnees, zu welchem Zweck die Lamellen auch mit einem Sägezahnprofil versehen sein können, und dem Transport zu einer Schneeauswurfeinrichtung dienen. Wenn der Schneeauswerfer in der Mitte der Frästrommel angebracht ist, so ist die Schraube der Lamellen zweiteilig mit entgegengesetzter Chiralität ausgebildet. Der Transport in der Horizontalen funktioniert wie in einer Archimedischen Schraube, sodass der über die gesamte Breite der Trommel abgefräste Schnee zur Mitte transportiert wird. Dort ist die Schneeschleuder angeordnet, welche den zur Mitte geförderten Schnee auswirft. Der Schneeauswerfer kann hierbei von einer Auswurfschleuder gebildet werden, welche, wie eingangs erwähnt, ein Schleuderrad mit wenigstens einem Auswurfhebel aufweist. Dabei ist die Auswurfrate naturgemäß von der Umfangsgeschwindigkeit des Schleuderrads bzw. der einzelnen Auswurfhebel abhängig sowie insbesondere auch vom aufgebrachten Drehmoment.

Die an der Abtriebswelle eines landwirtschaftlichen Geräts, und insbesondere eines Traktors, bereitgestellte Drehzahl muss in der Regel mit Hilfe eines Untersetzungsgetriebes auf eine geringere Drehzahl reduziert werden, um eine für die Ankoppelung einer Auswurfschleuder, und insbesondere einer Schneefräse, geeignete Drehzahl zu erreichen. So war es bei bekannten Schneefräsen beispielsweise üblich, die von der Abtriebswelle des Traktors bereitgestellte Drehzahl von 2200 Umdrehungen/min. auf 1100 Umdrehungen/min. zu untersetzen, sodass das von der Abtriebswelle zur Verfügung gestellte Drehmoment für die Auswurfschleuder der Schneefräse verdoppelt werden konnte. Eine weitere Untersetzung und somit eine weitere Erhöhung des Drehmoments war bei den bekannten Auswurfschleudern jedoch deshalb nicht möglich, weil durch die dadurch bewirkte weitere Reduzierung der Umdrehungszahl die erforderliche Auswurfleistung nicht mehr gewährleistet werden konnte.

FR 1 099 252 A offenbart eine Auswurfschleuder gemäß dem Oberteil des Anspruchs 1.

Die vorliegende Erfindung zielt daher darauf ab, eine Auswurfschleuder mit bei gleichen Antriebsverhältnissen erhöhter Auswurfleistung bereit zu stellen.

Zur Lösung dieser Aufgabe ist die Auswurfschleuder der eingangs genannten Art im Wesentlichen **dadurch gekennzeichnet, dass** Mittel zur definierten Veränderung des Schwenkwinkels des Auswurfhebels in Abhängigkeit vom Umdrehungswinkel des Schleuderrads vorgesehen sind, wobei die Mittel ausgebildet sind, um über einen ersten Umdrehungswinkelbereich eine Verschwenkung des Auswurfhebels in Umdrehungsrichtung und über einen weiteren Umdrehungswinkelbereich eine Verschwenkung des Auswurfhebels entgegen der Umdrehungsrichtung des Schleuderrades zu bewirken, und die Auswurföffnung innerhalb, vorzugsweise gegen oder am Ende des ersten Umdrehungswinkelbereichs tangential an das Schleuderrad angeschlossen ist.

Dadurch, dass der Auswurfhebel am Schleuderrad schwenkbar festgelegt ist, kann bei entsprechender Verschwenkung des Auswurfhebels die Umfangsgeschwindigkeit des Auswurfhebels bei gleich bleibender Drehzahl des Schleuderrads erhöht werden, sodass die Auswurfleistung verbessert wird. Dazu ist erfindungsgemäß vorgesehen, dass Mittel zur definierten Veränderung des Schwenkwinkels des Auswurfhebels in Abhängigkeit vom Umdrehungswinkel des Schleuderrads vorgesehen sind, wobei die Mittel ausgebildet sind, um über einen ersten Umdrehungswinkelbereich eine Verschwenkung des Auswurfhebels in Umdrehungsrichtung und über einen weiteren Umdrehungswinkelbereich eine Verschwenkung des Auswurfhebels entgegen der Umdrehungsrichtung des Schleuderrades zu bewirken. Bei einer derartigen Steuerung der Schwenkbewegung der einzelnen Auswurfhebel wird über den ersten Umdrehungswinkelbereich eine zunehmende Umfangsgeschwindigkeit der Auswurfhebel und bei überstreichen des weiteren Umdrehungswinkelbereichs wiederum eine sich verringernde Umfangsgeschwindigkeit der Auswurfhebel erreicht.

Dabei ist vorgesehen, dass die Auswurföffnung innerhalb, vorzugsweise gegen oder am Ende des ersten Umdrehungswinkelbereichs tangential an das Schleuderrad angeschlossen ist, also an einer Stelle, an welcher die Umfangsgeschwindigkeit des jeweiligen Auswurfhebels zunimmt bzw. am größten ist, sodass das auszuwerfende Gut mit entsprechend höherer Geschwindigkeit ausgeworfen wird.

Insgesamt kann durch die erfindungsgemäße Konstruktion die Drehzahl des Schleuderrads niedriger gewählt werden als bei herkömmlichen Konstruktionen, da die Umfangsgeschwindigkeit der Auswurfhebel sich nicht aus der Drehzahl des Schleuderrades alleine ergibt, sonder durch die oben beschriebene zusätzliche Verschwenkung der Auswurfhebel auf das erforderliche Maß erhöht werden kann. Es ist also beispielsweise bei Ankopplung der Auswurfschleuder an eine mit einer Drehzahl von 2200 Umdrehungen /min. rotierende Abtriebswelle eines Traktors eine bis zu vierfache Untersetzung möglich, d.h. auf eine Drehzahl von 540 Umdrehungen/min. Dadurch wird nun eine Vervierfachung des Drehmoments erreicht, sodass die Auswurfleistung der Auswurfschleuder entsprechend erhöht werden kann. Durch das höhere Drehmoment ist es beispielsweise möglich am Schleuderrad eine geringere Anzahl an Auswurfhebeln anzuordnen, sodass insgesamt ein höherer Füllgrad erreicht wird und größere Mengen des Guts in der Zeiteinheit ausgeworfen werden können.

Um die Auswurfkräfte hierbei besonders effizient zur Wirkung zu bringen, ist bevorzugt vorgesehen, dass der Auswurfhebel angeordnet ist, bevorzugt abgewinkelt ausgebildet ist, sodass der sich nach außen erstreckende Hebelarm in einer in Bezug auf das Schleuderrad radialen Stellung mit der Achse der Auswurföffnung ein Winkel von im wesentlichen 90° einschließt.

Eine besonders einfache Steuerung der Auswurfhebelverschwenkung gelingt gemäß einer bevorzugten Ausführungsform dadurch, dass der wenigstens eine Auswurfhebel als zweiarmiger Hebel ausgebildet ist, wobei der sich nach innen erstreckende Hebelarm mit einer Zwangsführung zusammenwirkt. Die Zwangsführung kann hierbei eine Führungsbahn umfassen, welche mit einem Führungsstift des Hebelarms zusammenwirkt. Dabei ist eine mit besonders wenig Reibungsverlusten verbundene Konstruktion von besonderem Vorteil, bei welcher die Führungsbahn exzentrisch zur Rotationsachse des Schleuderrads verläuft. Ein weiterer Vorteil einer derartigen Konstruktion liegt darin, dass die Einstellung des Ausmaßes der Exzentrizität in einfacher Weise eine Beeinflussung der Schwenkwinkelveränderung der Auswurfhebel ermöglicht.

Wie bereits erwähnt, ist ein besonders bevorzugtes Anwendungsgebiet der erfindungsgemäßen Auswurfschleuder bei Schneefräsen gegeben und es ist daher mit Vorteil vorgesehen, dass das Schleuderrad an eine Förderspirale einer Schneefräse angeschlossen ist.

Um schließlich in einfacher Weise einen Antrieb für die Auswurfschleuder bereit zu stellen, ist gemäß einer bevorzugten Ausführungsform vorgesehen, dass das Schleuderrad mit einer Antriebswelle verbunden ist, die mit einer Abtriebswelle eines landwirtschaftlichen Fahrzeugs, insbesondere Traktors, kuppelbar ist.

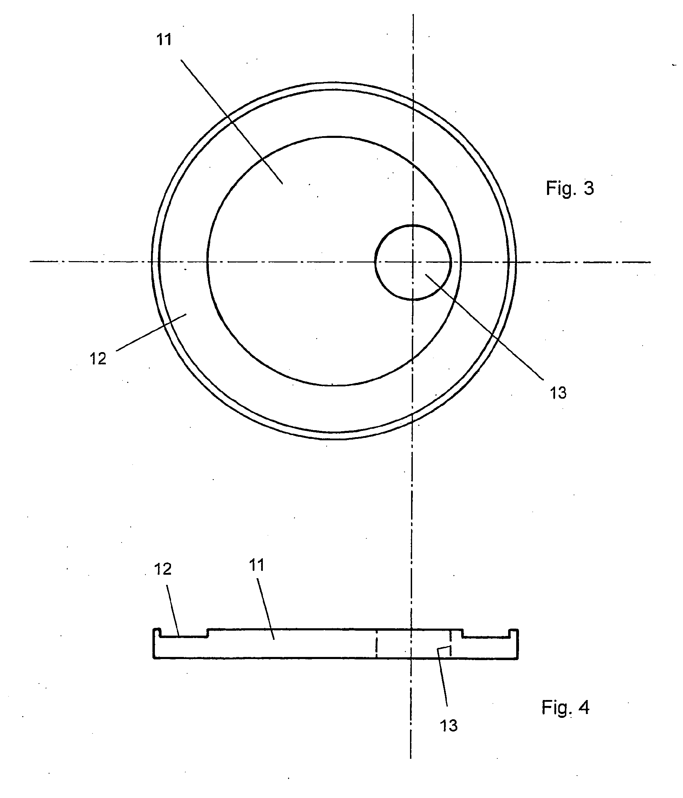

Die Erfindung wird nachfolgend anhand eines in der Zeichnung schematisch dargestellten Ausführungsbeispiels näher erläutert. In dieser zeigen Fig.1 einen Querschnitt durch die erfindungsgemäße Auswurfschleuder, Fig.2 eine Detailansicht des Schleuderrads und Fig.3 und Fig.4 eine Detailansicht des exzentrischen Führungsteils.

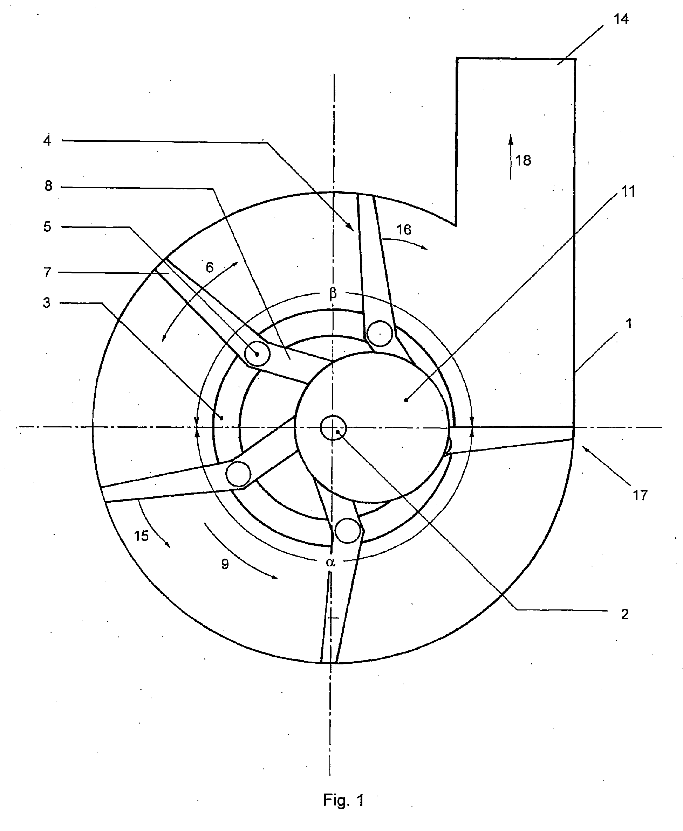

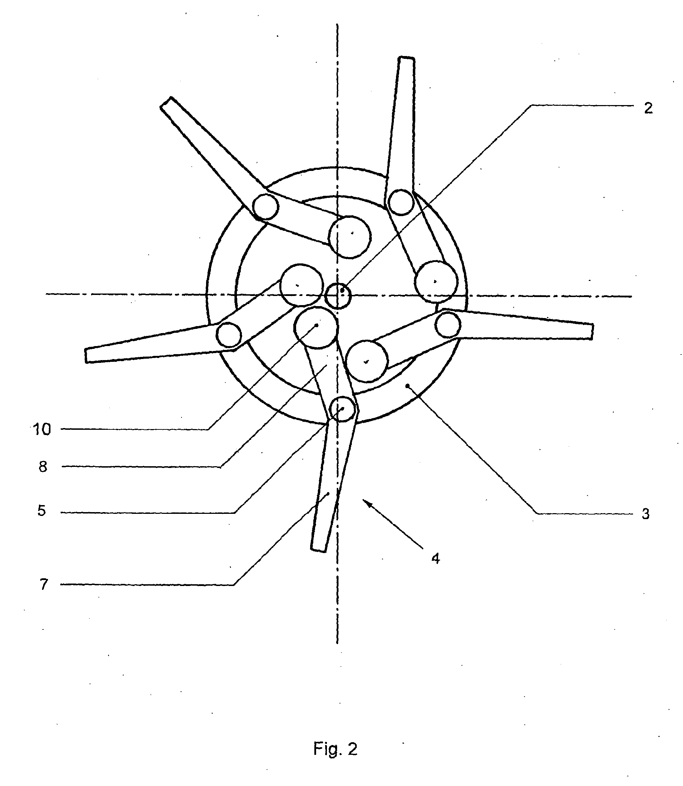

In Fig.1 ist das Gehäuse der Auswurfschleuder mit 1 bezeichnet, in welchem ein Schleuderrad 3 in Richtung des Pfeils 9 um die Achse 2 rotierbar gelagert ist. Das Schleuderrad weist eine Mehrzahl von Auswurfhebeln 4 auf, welche jeweils entsprechend dem Doppelpfeil 6 um eine Achse 5 schwenkbar am Schleuderrad 3 angelenkt sind. Die Auswurfhebel 4 sind als zweiarmige Hebel ausgebildet, wobei der äußere Hebelarm 7 die eigentliche Auswurfarbeit übernimmt und der sich nach innen erstreckende Hebelarm 8 jeweils Führungsstifte bzw. Lager 10 aufweist, wie insbesondere aus Fig.2 ersichtlich ist. Die Führungsstifte 10 sind in einer kreisförmigen Führungsbahn 12 eines Führungsteils 11 geführt, wobei die Führungsbahn 12 exzentrisch zur Rotationsachse 2 des Schleuderrads 3 angeordnet ist. Der Führungsteil weist eine Durchbrechung 13 auf, die dem Durchtritt einer Antriebswelle für das Schleuderrad 3 dient. Wenn das Schleuderrad entsprechend dem Pfeil 9 in Rotation versetzt wird, ergibt sich folgende Bewegung der Auswurfhebel 4. Über einen ersten Umdrehungswinkelbereich α werden die Auswurfhebel 4 während der Rotation des Schleuderrads 3 in Richtung des Pfeils 9 ausgehend von einer neutralen Position immer weiter in Richtung des Pfeils 15 nach vor bewegt, sodass die Umfangsgeschwindigkeit der Auswurfhebel 4 im Vergleich zu einer starren Festlegung am Schleuderrad 3 erhöht wird. Die größte Umfangsgeschwindigkeit der Auswurfhebel 4 ergibt sich an der mit 17 bezeichneten Stelle, an welcher der Abwurf des Förderguts in Richtung des Pfeils 18 über die Auswurföffnung 14 erfolgt. Über den weiteren Umdrehungswinkelbereich β erfolgt dann eine Rückverschwenkung der Auswurfhebel 4 in Richtung des Pfeils 16, sodass in diesem Bereich die Umfangsgeschwindigkeit der Auswurfhebel 4 im Vergleich zu einer starren Festlegung der Auswurfhebel 4 am Schleuderrad 3 vermindert wird.

## Patentansprüche

1. Auswurfschleuder mit einem wenigstens einen Auswurfhebel (4) aufweisenden Schleuderrad (3), welches in einem eine Auswurföffnung (14) aufweisenden Gehäuse (1) gelagert und zu Rotation antreibbar ist, wobei der wenigstens eine Auswurfhebel (4) am Schleuderrad (3) schwenkbar festgelegt ist **dadurch gekennzeichnet, dass** Mittel zur definierten Veränderung des Schwenkwinkels des Auswurfhebels (4) in Abhängigkeit vom Umdrehungswinkel des Schleuderrads (3) vorgesehen sind, wobei die Mittel ausgebildet sind, um über einen ersten Umdrehungswinkelbereich (α) eine Verschwenkung (15) des Auswurfhebels (4) in Umdrehungsrichtung (9) und über einen weiteren Umdrehungswinkelbereich (β) eine Verschwenkung (16) des Auswurfhebels (4) entgegen der Umdrehungsrichtung (9) des Schleuderrades (3) zu bewirken, und die Auswurföffnung (14) innerhalb, vorzugsweise gegen oder am Ende des ersten Umdrehungswinkelbereichs (α) tangential an das Schleuderrad (3) angeschlossen ist.

2. Auswurfschleuder nach Anspruch 1, **dadurch gekennzeichnet, dass** der wenigstens eine Auswurfhebel (4) als zweiarmiger Hebel ausgebildet ist, wobei der sich nach innen erstreckende Hebelarm (8) mit einer Zwangsführung zusammenwirkt.

3. Auswurfschleuder nach Anpsruch 1 oder 2, **dadurch gekennzeichnet, dass** die Zwangsführung eine Führungsbahn (12) umfasst, welche mit einem Führungsstift (10) des Hebelarms (8) zusammenwirkt.

4. Auswurfschleuder nach Anspruch 1, 2 oder 3, **dadurch gekennzeichnet, dass** die Führungsbahn (12) exzentrisch zur Rotationsachse (2) des Schleuderrades (3) verläuft.

5. Auswurfschleuder nach einem der Ansprüche 1 bis 4, **dadurch gekennzeichnet, dass** der Auswurfhebel angeordnet ist, bevorzugt abgewinkelt ausgebildet ist, sodass der sich nach außen erstreckende Hebelarm in einer in Bezug auf das Schleuderrad radialen Stellung mit der Achse der Auswurföffnung ein Winkel von im wesentlichen 90° einschließt.

6. Auswurfschleuder nach einem der Ansprüche 1 bis 5, **dadurch gekennzeichnet, dass** das Schleuderrad (3) an eine Förderspirale einer Schneefräse angeschlossen ist.

7. Auswurfschleuder nach einem der Ansprüche 1 bis 6, **dadurch gekennzeichnet, dass** das Schleuderrad (3) mit einer Antriebswelle verbunden ist, die mit einer Abtriebswelle eines landwirtschaftlichen Fahrzeugs, insbesondere Traktors, kuppelbar ist.

8. Schneefräse mit einer Auswurfschleuder nach einem der Ansprüche 1 bis 7.

## Claims

1. Centrifugal ejector with a centrifugal wheel (3) which has at least one ejection lever (4), is mounted in a housing (1) which has an ejection opening (14), and can be driven such that it rotates, wherein the at least one ejection lever (4) is fixed pivotably to the centrifugal wheel (3), **characterised in that** means are provided for the defined changing of the pivoting angle of the ejection lever (4) as a function of the angle of rotation of the centrifugal wheel (3), wherein the means are configured to effect a pivoting (15) of the ejection lever (4) in the direction of rotation (9) over a first angle of rotation range (α) and a pivoting (16) of the ejection lever (4) counter to the direction of rotation (9) of the centrifugal wheel (3) over a further angle of rotation range (β), and the ejection opening (14) is attached to the centrifugal wheel (3) tangentially within, preferably towards or at the end of the first angle of rotation range (α).

2. Centrifugal ejector according to Claim 1, **characterised in that** the at least one ejection lever (4) is configured as a two-armed lever, wherein the inwardly extending lever arm (8) interacts with a restricted guidance device.

3. Centrifugal ejector according to Claim 1 or 2, **characterised in that** the restricted guidance device comprises a guide track (12) which interacts with a guide pin (10) of the lever arm (8).

4. Centrifugal ejector according to Claim 1, 2 or 3, **characterised in that** the guide track (12) runs eccentrically to the rotational axis (2) of the centrifugal wheel (3).

5. Centrifugal ejector according to one of Claims 1 to 4, **characterised in that** the ejection lever is arranged, preferably configured in an angled manner, in such a manner that the outwardly extending lever arm encloses an angle of essentially 90° with the axis of the ejection opening when in a radial position with respect to the centrifugal wheel.

6. Centrifugal ejector according to one of Claims 1 to 5, **characterised in that** the centrifugal wheel (3) is attached to a conveyor screw of a snow blower.

7. Centrifugal ejector according to one of Claims 1 to 6, **characterised in that** the centrifugal wheel (3) is connected to a drive shaft which can be coupled to a drive shaft of an agricultural vehicle, in particular a tractor.

8. Snow blower with a centrifugal ejector according to one of Claims 1 to 7.

## Revendications

1. Centrifugeur-éjecteur avec une roue de centrifugeur (3) présentant au moins un levier éjecteur (4), la roue de centrifugeur étant montée dans un boîtier (1) et pouvant être entraînée en rotation. Le ou les leviers éjecteurs (4) sont fixés de manière pivotante sur la roue de centrifugeur (3) et des moyens permettent de modifier de manière définie l'angle de pivotement du levier éjecteur (4) en fonction de l'angle de rotation de la roue de centrifugeur (3). Ces moyens sont conçus de sorte qu'ils entraînent par une première plage d'angle de rotation (a) un pivotement (15) du levier éjecteur (4) dans le sens de rotation (9) et par une deuxième plage d'angle de rotation (β) un pivotement (16) du levier éjecteur (4) dans le sens de rotation contraire (9) de la roue centrifugeur (3) et que l'ouverture d'éjection (14) est raccordée tangentiellement à la roue de centrifugeur au sein de la première plage d'angle de rotation, de préférence vers ou à la fin de celle-ci.

2. Centrifugeur-éjecteur selon la revendication 1, **caractérisé en ce que** le ou les leviers éjecteurs (4) sont conçus comme levier à deux bras, le bras de levier (8) se dressant vers l'intérieur coopère avec un guidage forcé.

3. Centrifugeur-éjecteur selon la revendication 1 ou 2, **caractérisé en ce que** le guidage forcé comprend une glissière (12) coopérant avec une broche de guidage (10) du bras de levier (8).

4. Centrifugeur-éjecteur selon la revendication 1, 2 ou 3, **caractérisé en ce que** la glissière (12) a une position excentrique par rapport à l'axe de rotation (2) de la roue de centrifugeur (3).

5. Centrifugeur-éjecteur selon une des revendications 1 à 4, **caractérisé en ce que** le levier éjecteur est disposé et de préférence est conçu en position angulée, si bien que le bras de levier se dressant vers l'extérieur inclut un angle de 90" en position radiale par rapport à la roue de centrifugeur avec l'axe de l'ouverture d'éjection.

6. Centrifugeur-éjecteur selon une des revendications 1 à 5, **caractérisé en ce que** la roue de centrifugeur (3) est raccordé à une spirale de transport d'une fraise à neige.

7. Centrifugeur-éjecteur selon une des revendications 1 à 6, **caractérisé en ce que** la roue de centrifugeur (3) est raccordée avec un arbre d'entrée pouvant être accouplé à un arbre de sortie d'un véhicule agricole, notamment d'un tracteur.

8. Fraise à neige équipée d'un centrifugeur-éjecteur selon une des revendications 1 à 7.
